# DEMANDE DE BREVET EUROPEEN

(11) **EP 0 931 890 A1**
(43) Date de publication de la demande: **28.07.1999**
(21) Numéro de dépôt: 99400073.5
(22) Date de dépôt: 13.01.1999
(51) Int. Cl.: E04D 3/36

(54) **Dispositif de fixation et ossature mettant en oeuvre un tel dispositif telle qu'une ossature destinée à fixer sur une toiture des moyens d'isolation**

(30) Priorité: 16.01.1998 FR 9800444
(71) Demandeur: Placoplatre Lambert, 92282 Suresnes Cedex (FR)
(72) Inventeur: Funten, Marc, 77290 Mitry Mory (FR); Roffin, Patrick, 45210 Nargis (FR); Truquin, Patrick, 60340 Villers-sous-Saint-Leu (FR)
(74) Mandataire: CABINET BONNET-THIRION

(57) **Abrégé**

Dispositif de fixation comprenant, d'une part, une pince de fixation (20) élastique comportant une âme et une aile dite inférieure prolongée selon un retour dit inférieur s'étendant parallèlement à l'aile inférieure en direction de l'âme, l'espacement entre l'aile inférieure et le retour inférieur étant prévu pour recevoir le bord d'éléments tels que des plaques de toiture (10), et, d'autre part, un organe limiteur d'écartement, voir de serrage, destiné à limiter l'écartement entre l'aile inférieure et le retour inférieur, voir les solliciter en rapprochement, pour pincer ledit bord en vue de fixer la pince de fixation (20) sur ledit bord : un tel dispositif de fixation est utilisable pour réaliser une ossature, destinée à fixer sur une toiture des moyens d'isolation en vue de sa rénovation, comportant des profilés (13) dits primaires, s'étendant selon la ligne de plus grande pente de ladite toiture, et des profilés (14) dits secondaires s'étendant selon une ligne perpendiculaire à la ligne de plus grande pente et portés par les profilés primaires (13) qui sont fixés à la toiture par l'intermédiaire du dispositif de fixation.

## Description

La présente invention a pour objet un dispositif de fixation, notamment destiné à être fixé sur le bord d'éléments, tels que des plaques de toiture en vue par exemple de rénover celle-ci.

En matière de rénovation de toiture, on a déjà proposé des ossatures comportant des profilés dits primaires, s'étendant selon la ligne de plus grande pente de ladite toiture, et des profilés dits secondaires s'étendant selon une ligne perpendiculaire à la ligne de plus grande pente et portés par les profilés primaires. Ces ossatures sont destinées à recevoir des moyens d'isolation et d'étanchéité.

Les toitures concernées sont les toitures, de surfaces variées, de tout type de bâtiment, industriel, commercial ou autre ; il est souhaitable que l'opération de rénovation puisse être effectuée alors que le bâtiment est en activité.

Les toitures peuvent être constituées de diverses plaques de toiture, en acier, en plastique, en fibres-ciment... et de toute forme, planes, cintrées, gaufrées, ondulées, nervurées....

Jusqu'ici, les ossatures sont fixées aux plaques de toiture par perçage, vissage, rivetage, toutes opérations qui donnent lieu à poussières, copeaux et autres déchets et nuisent ainsi au confort des personnes en activité dans le bâtiment traité ; cette nuisance est encore plus grave lorsque les plaques de toiture sont en amiante-ciment : l'amiante incorporé au ciment est sans danger mais tel n'est plus le cas lorsque ces plaques sont usinées.

La présente invention a pour but d'éviter ces inconvénients.

Selon l'invention, un dispositif de fixation comprend, d'une part, une pince de fixation élastique comportant une âme et une aile dite inférieure prolongée selon un retour dit inférieur s'étendant parallèlement à l'aile inférieure en direction de l'âme, l'espacement entre l'aile inférieure et le retour inférieur étant prévu pour recevoir le bord d'éléments tels que des plaques de toiture, et, d'autre part, un organe limiteur d'écartement destiné à limiter l'écartement entre l'aile inférieure et le retour inférieur lesquels sont destinés à pincer ledit bord en vue de fixer la pince de fixation sur ledit bord.

De préférence, le raccordement du retour inférieur à l'aile inférieure est étagé et est constitué de deux parties, l'une dite extérieure et l'autre dite intérieure, décalées parallèlement à l'aile inférieure et au retour inférieur et reliées par une partie intermédiaire s'étendant globalement parallèlement à l'aile inférieure et au retour inférieur.

Avantageusement, l'aile inférieure et le retour inférieur ont une forme adaptée à celle des éléments sur lesquelles elles sont destinées à être montées.

De préférence, la forme de l'aile inférieure et du retour inférieur est cylindrique et reproduit l'ondulation de l'élément tel qu'une plaque de toiture ondulée, leur concavité étant dirigée du côté où se situe l'âme de la pince de fixation.

De préférence, la partie intermédiaire du raccordement et l'aile inférieure présentent chacune au moins un trou en regard l'un de l'autre permettant le passage de l'organe limiteur d'écartement.

Avantageusement, l'aile inférieure est munie sur ses bords latéraux longitudinaux de griffes dont les pointes d'extrémité sont dirigées vers le retour inférieur et le raccordement.

Selon une forme de réalisation, l'âme porte également une aile dite supérieure s'étendant parallèlement à l'aile inférieure et du même côté que celle-ci par rapport à l'âme, l'aile supérieure étant prolongée par un retour dit supérieur s'étendant entre les ailes inférieure et supérieure parallèlement à celles-ci et en direction de l'âme.

Le dispositif de fixation comprend en outre une platine de forme générale rectangulaire destinée à être reçue dans l'espacement existant entre l'aile supérieure et le retour supérieur munis tous deux de trous disposés en regard l'un de l'autre.

Selon une forme de réalisation, avantageusement l'âme comporte latéralement deux fentes ; les fentes sont inclinées par rapport à l'axe longitudinal de l'âme ; les deux fentes se rapprochent l'une de l'autre en se rapprochant de l'aile inférieure ; en variante, les fentes sont parallèles à l'axe longitudinal de l'âme.

L'un au moins des bords de chaque fente est un bord à dents.

Avantageusement, du côté intérieur, un bord coupé dans l'âme définit une entrée pour les fentes.

De préférence, le profil en coupe des fentes est incliné par rapport au plan de symétrie longitudinal de l'âme ; le profil en coupe incliné des fentes est obtenu par une découpe inclinée des fentes par rapport au plan de l'âme ; le profil en coupe incliné des fentes est obtenu par une découpe réalisée perpendiculairement à l'âme, les bords de l'âme où sont réalisées ces découpes étant ensuite légèrement pliés pour s'étendre avec un certain angle par rapport à l'âme.

Selon une autre forme de réalisation, la pince de fixation présente, de part et d'autre de l'âme, deux bras élastiques s'étendant le long de l'âme perpendiculairement à celle-ci et dont l'extrémité libre est conformée en crochet.

Selon une autre variante, l'âme porte également une aile dite supérieure s'étendant parallèlement à l'aile inférieure et du même côté que celle-ci par rapport à l'âme, l'aile supérieure étant prolongée, sur chacun de ses côtés latéraux, d'un bord tombé dirigé vers l'aile inférieure et lui-même prolongé d'un retour s'étendant parallèlement à lui et dirigé vers l'aile supérieure ; des griffes, issues des retours, s'étendent dans les rainures définies par les bords tombés et les retours ; les retours ont leur extrémité conformée en crochet.

Selon une forme de réalisation préférée, l'âme, l'aile inférieure et le retour inférieur sont d'une seule pièce ; le retour inférieur s'étend parallèlement à l'aile inférieure en direction de l'âme ; l'organe limiteur d'écartement est de plus un organe de serrage constitué d'une vis et d'un écrou borgne.

Selon une autre forme de réalisation, l'aile inférieure et le retour inférieur sont d'une seule pièce sur laquelle l'âme est rapportée ; l'âme porte au moins une patte à crochets traversant les trous en regard ménagés dans la partie intermédiaire du raccordement et l'aile inférieure, en constituant l'organe limiteur d'écartement ; ainsi, l'organe limiteur d'écartement est mis à profit pour réaliser l'assemblage des deux pièces constitutifs d'une telle variante.

L'invention a également pour objet une ossature destinée à fixer sur une toiture des moyens d'isolation en vue de sa rénovation, comportant des profilés dits primaires, s'étendant selon la ligne de plus grande pente de ladite toiture, et des profilés dits secondaires s'étendant selon une ligne perpendiculaire à la ligne de plus grande pente et portés par les profilés primaires : selon l'invention, les profilés primaires sont fixés à la toiture par l'intermédiaire de dispositifs de fixation tels que ci-dessus.

De préférence, les profilés secondaires ont globalement une forme de T ayant un pied prolongé, par un pliage à 90 degrés, d'un retour lui-même prolongé, par un pliage à 180 degrés, d'une partie constituant le dos du profilé secondaire dont l'extrémité est repliée à 180 degrés et s'étend, en direction du pied dans le plan du retour.

Avantageusement, le profilé secondaire est fixé au profilé primaire par une équerre droite en forme de L dont une aile est fixée au pied du profilé secondaire par une vis et dont l'autre aile est fixée au dos du profilé primaire également par une vis.

De préférence, le profilé secondaire est fixé au profilé primaire par un étrier qui comprend une base munie de deux jambages globalement parallèles dont l'extrémité libre est recourbée vers l'intérieur, les deux extrémités se faisant face et définissant deux rainures parallèles adaptées à recevoir les bords libres des ailes du profilé primaire en forme de U, les jambages étant légèrement plus hauts que les ailes du profilé primaire et la base de l'étrier étant munie d'un trou taraudé avec lequel coopère une vis de blocage.

Avantageusement, sur l'un des bords de la base de l'étrier qui ne porte pas de jambage, la base porte une tête plane s'étendant perpendiculairement à la base dans la direction opposée à celle des jambages, le bord libre de la tête étant plié à angle droit pour constituer une visière qui s'étend parallèlement à la base en étant placée au dessus d'elle, et la longueur de la visière étant légèrement inférieure à la moitié de la largeur du dos du profilé secondaire.

Pour mieux faire comprendre l'objet de l'invention, on va en décrire maintenant, à titre d'exemple, purement illustratif et non limitatif, des modes de réalisations représentés sur les dessins annexés.

Sur ces dessins :
- la figure 1 est une vue partielle en perspective montrant la première étape d'une rénovation de toiture en plaques ondulées utilisant des dispositifs de fixation selon l'invention ;
- la figure 2 est analogue à la figure 1 et montre partiellement l'ossature destinée à recevoir des panneaux d'isolation ;
- la figure 3 est analogue aux figures 1 et 2 et montre les panneaux d'isolation mis en place ;
- la figure 4 est une vue en coupe partielle montrant la jonction latérale de deux panneaux d'isolation contigus ;
- la figure 5 est une vue en plan d'un gabarit facilitant la mise en place des pinces de fixation ;
- la figure 6 est une vue partielle en perspective montrant la fixation d'un profilé primaire à une plaque de toiture à l'aide du dispositif de fixation selon l'invention ;
- les figures 7 à 14 montrent des variantes de dispositifs de fixation selon l'invention, les figures 7, 8 et 14 étant des vues en perspective, les figures 9 et 10 des vues partielles de face et les figures 11 à 13 des vues partielles de dessus ;
- la figure 15 est une vue en perspective montrant une autre variante de dispositif de fixation selon l'invention ;
- la figure 16 est une vue partielle de face de la variante de la figure 15, le profilé primaire étant en place ;
- la figure 17 est une vue en perspective montrant encore une autre variante de dispositif de fixation selon l'invention ;
- la figure 18 est une vue en perspective montrant un étrier de fixation d'un profilé secondaire à un profilé primaire ;
- la figure 19 est une vue partielle en coupe de l'étrier de la figure 18, le profilé primaire étant en place ;
- la figure 20 est une vue partielle en coupe de l'étrier de la figure 18, le profilé secondaire étant en place ;
- la figure 21 est une vue partielle en perspective montrant un prolongateur pour la jonction bout à bout de deux profilés secondaires ;
- la figure 22 est une vue partielle en perspective montrant une autre application des dispositifs de fixation selon les figures 7 à 17 ;
- la figure 23 est une vue éclatée en perspective d'une autre variante de dispositif de fixation selon l'invention, la pince étant ici en deux pièces ;
- la figure 24 est une vue de face du dispositif de la figure 23, les deux pièces étant assemblées ;
- les figures 25 et 26 montrent, respectivement selon les flèches XXV et XXVI de la figure 23, la pièce portant l'aile inférieure et le retour inférieur du dispositif des figures 23 et 24 ;
- la figure 27 est une vue partielle en coupe de la figure 24 ;
- la figure 28 illustre schématiquement l'assemblage des deux pièces constituant le dispositif des figures 23 à 27, vues globalement selon la lfèche XXVIII de la figure 24.

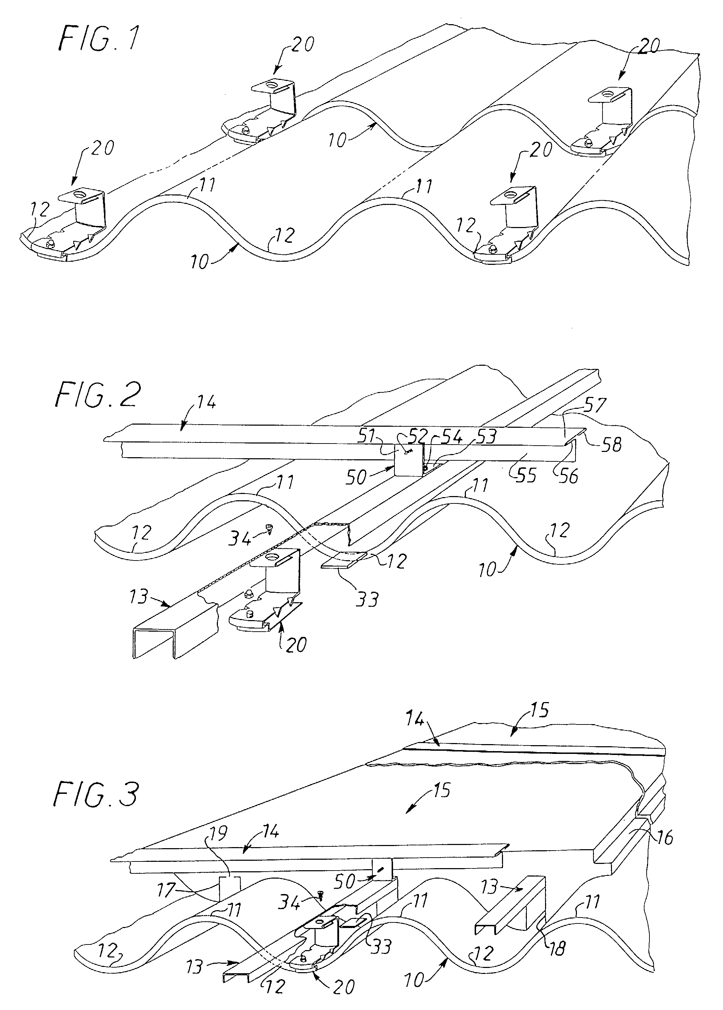

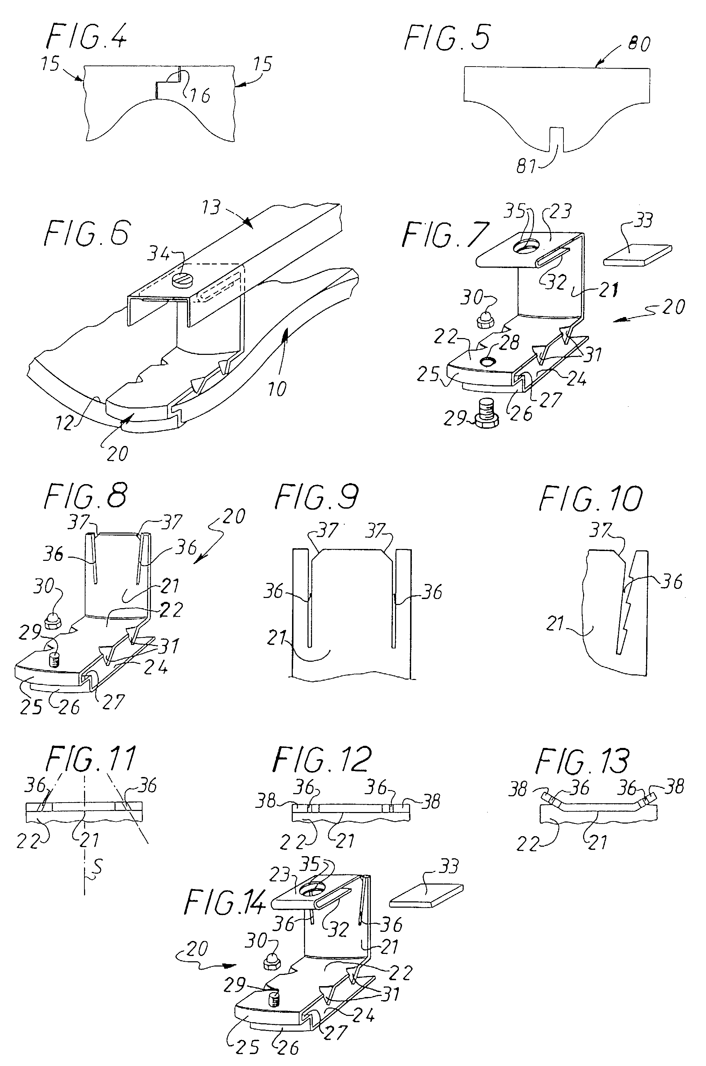

En se reportant aux figures 3 et 7, on voit qu'une pince de fixation 20 selon l'invention est en forme de U dont les ailes 22 et 23 s'étendent globalement perpendiculairement à l'âme 21, l'une 22 étant dite inférieure et l'autre 23 étant dite supérieure, pour des raisons de commodité compte tenu de la présentation de la pince de fixation 20 sur la figure 7.

L'aile inférieure 22 est prolongée selon un retour 24 dit inférieur s'étendant, à l'extérieur du U, parallèlement à l'aile inférieure 22 et en direction de l'âme 21 du U ; le raccordement du retour inférieur 24 à l'aile inférieure 22 peut s'étendre d'un seul tenant globalement parallèlement à l'âme 21 ; ici, on préfère qu'il soit étagé, pour des raisons qui apparaîtront ultérieurement ; ainsi, ce raccordement est constitué de deux parties, l'une 25 dite extérieure, l'autre 26 dite intérieure, décalées parallèlement aux ailes 22 et 23 du U, et reliées par une partie intermédiaire 27 s'étendant globalement parallèlement aux ailes 22 et 23 du U.

La hauteur du raccordement 25-26 est telle que l'espacement entre l'aile inférieure 22 et le retour inférieur 24 est prévu pour recevoir la bordure des plaques de la toiture ; dans l'exemple décrit et représenté, ces plaques sont des plaques ondulées en fibres-ciment ; il est avantageux d'adapter la forme de l'aile inférieure 22 et du retour inférieur 24 à celle des plaques de la toiture ; ici, elle est cylindrique et reproduit l'ondulation des plaques ondulées ; il est à remarquer que la concavité de l'aile inférieure 22 et du retour inférieur 24 est dirigée vers l'aile supérieure 23 de la pince de fixation 20 qui est placée à l'extérieur des plaques ondulées de la toiture au droit de l'ondulation basse ou inférieure 12 de la toiture.

La pince de fixation 20 est une pince élastique, avantageusement réalisée en acier dit à ressort ; dès lors, un organe limiteur d'écartement, destiné à limiter l'écartement entre l'aile inférieure 22 et le retour inférieur 24, peut être prévu ; ici, l'organe limiteur d'écartement est de plus un organe de serrage permettant de solliciter en rapprochement l'aile inférieure 22 et le retour inférieur 24 pour pincer le rebord de la plaque de toiture ; pour ce faire, la partie intermédiaire 27 du raccordement et l'aile inférieure 22 présentent chacune un trou 28 en regard l'un de l'autre, seul le trou 28 de l'aile inférieure 22 étant visible sur la figure 7, permettant le passage de la vis 29 d'un boulon de serrage dont l'écrou 30 est prévu de préférence du type borgne.

Pour affermir la fixation de la pince de fixation 20 sur la plaque de toiture, il peut être avantageux, comme cela est visible sur la pince de fixation 20 représentée, de munir l'aile inférieure 22, sur ses bords latéraux longitudinaux, de griffes 31 dont les pointes d'extrémité sont dirigées vers le retour inférieur 24 et le raccordement 25-26, et ce pour faciliter la mise en place de la pince de fixation 20 ; cette mise en place est dès lors effectuée en force, manuellement ou à l'aide d'un outil tel qu'un marteau, et est complète lorsque la partie intérieure 26 du raccordement bute contre le bord de la plaque de toiture ; on appréciera que le contact dudit bord avec la partie intérieure 26 du raccordement se fait selon une surface importante en sorte que les chocs éventuels durant la mise en place ne risquent pas d'effriter le bord de la plaque de toiture même si celle-ci est en un matériau d'une certaine fragilité ; de plus, la partie extérieure 25 du raccordement étant en retrait par rapport à sa partie intérieure 26, on est sûr que, lors de la mise en place, le filet de la vis 28 ne viendra pas au contact du bord de la plaque de toiture et donc ne sera pas blessé.

On appréciera également que même si, lors de la mise en place de la pince de fixation, le bord de la plaque de toiture est effrité et/ou si les griffes 31 blessent localement la face externe de la plaque de toiture, les poussières en résultant ne risquent pas de souiller l'environnement à l'intérieur du bâtiment, ces opérations étant effectuées à l'extérieur de celui-ci.

La pince de fixation 20 est également munie de moyens pour fixer les profilés primaires 13.

Ici, ces moyens sont constitués de l'aile supérieure 23 prolongée selon un retour 32 dit supérieur s'étendant, à l'intérieur du U, parallèlement à l'aile supérieure 23 et en direction de l'âme 21 du U ; l'espacement entre l'aile supérieure 23 et le retour supérieur 32 est prévu, selon une autre caractéristique de l'invention, pour recevoir une platine 33 en tôle, de forme rectangulaire, dans laquelle peut mordre et se visser une vis auto-visseuse 34, figure 6, qui traverse des trous 35 ménagés en regard l'un de l'autre dans l'aile supérieure 23 et le retour supérieur 32 de la pince de fixation 20 qui est en une matière que ne peut pas percer la vis auto-visseuse 34.

Selon la variante de la figure 8, les moyens pour fixer les profilés primaires 13 sont constitués de deux fentes 36 ménagées dans l'âme 21 ; ici, la pince de fixation 20 ne comporte pas d'aile supérieure 23 : elle est en forme générale de L au lieu de U.

Les deux fentes 36 sont inclinées par rapport à l'axe longitudinal de l'âme 21 d'un angle par exemple d'environ cinq degrés ; elles sont disposées symétriquement par rapport audit axe et se rapprochent l'une de l'autre en se rapprochant de l'aile inférieure 22 ; du côté intérieur, un bord coupé 37 dans l'âme 21 définit une entrée pour les fentes 36 qui facilite l'entrée des ailes du profilé primaire 13 en U.

Les fentes 36 sont destinées en effet à recevoir les ailes du profilé primaire 13 en U et permettent son accrochage et son maintien sans risque de glissement de celui-ci sur la pince de fixation 20.

Compte tenu des dimensions relatives de l'âme 21 et du profilé primaire 13, en particulier la largeur des fentes 36 et l'épaisseur des ailes du profilé primaire 13, ainsi que de la pente de la toiture et des efforts de soulèvement dus aux vents variables selon les régions, il est possible de donner d'autres formes et/ou orientations aux fentes 36 ; celles-ci peuvent être parallèles à l'axe longitudinal de l'âme 21, figure 9, ou limitées par un bord à dents, figure 10.

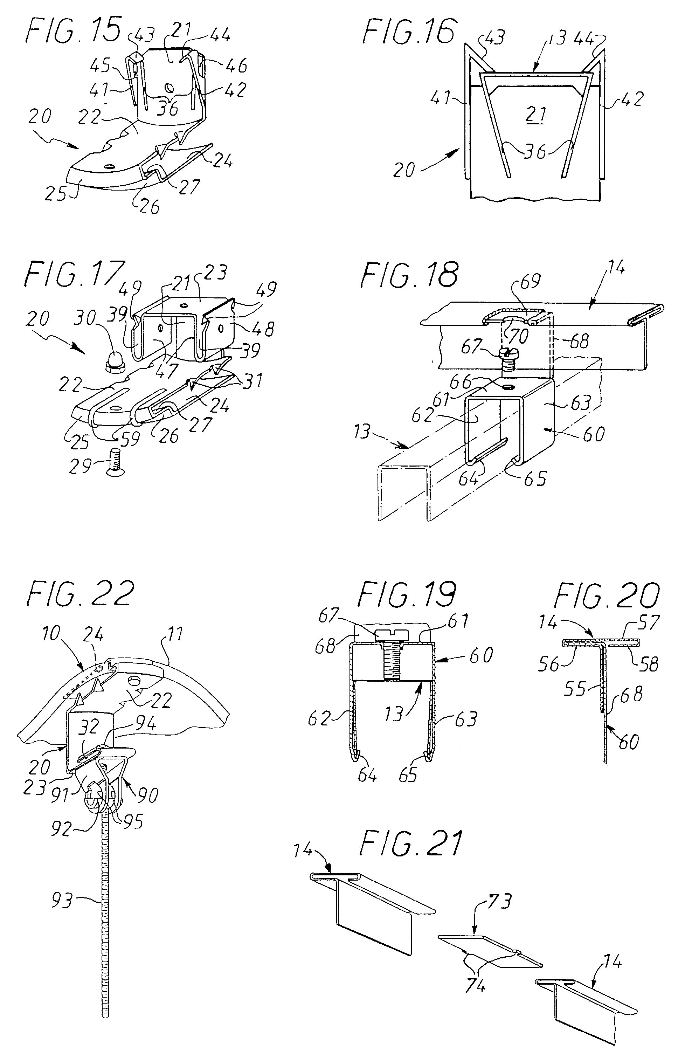

Quelles que soient leurs formes, telles que celles décrites ci-dessus, la résistance à l'arrachement est améliorée lorsque le profil en coupe des fentes 36 est incliné par rapport au plan de symétrie longitudinal S de l'âme 21, comme le montrent les figures 8 et 11 où les profils en coupe sont inclinés de manière symétrique par rapport au plan S ; en variante, ces profils sont parallèles.

Lorsque les ailes du profilé primaire 13 sont introduites à force dans les fentes 36 à profils inclinés, une légère déformation locale des ailes du profilé primaire 13, au droit des fentes 36, augmente la résistance de la fixation.

Pour obtenir les profils inclinés des fentes 36, il est possible, comme cela est représenté sur les figures 8 et 11, d'effectuer une découpe des fentes 36 inclinée par rapport au plan de l'âme 21 ; en variante, la découpe est réalisée perpendiculairement à l'âme 21, figure 12, puis les bords 38, figure 13, de l'âme 21, où sont réalisées les découpes, sont ensuite déformés en sorte qu'ils s'étendent avec un certain angle par rapport au reste de l'âme 21.

A titre d'exemple, de très bons résultats ont été obtenus avec une pince de fixation 20 ayant les caractéristiques des figures 8 et 11, en acier à ressort d'épaisseur 10/10è de millimètre, des fentes 36 de largeur de 7/10è de millimètre inclinées de 5 degrés par rapport à l'axe longitudinal de l'âme 21 et dont les profils sont inclinés de 20 degrés par rapport au plan S, le profilé primaire 13 étant en acier galvanisé de 6/10è de millimètre d'épaisseur.

Les pinces de fixation 20 qui viennent d'être décrites en référence aux figures 8 à 13 permettent la fixation de profilés primaires 13 sans qu'il soit besoin de faire appel à des vis de fixation telles que les vis 34.

La figure 14 montre une variante de pince de fixation 20 comportant les caractéristiques de la pince de fixation de la figure 7 et celles de la pince de fixation de la figure 8, c'est-à-dire qu'elle comporte à la fois une aile supérieure 23 et un retour supérieur 32 et une âme 21 munie de fentes 36 ; une telle pince permet la fixation d'un profilé primaire 13 à l'aide des fentes 36 et/ou d'une vis de fixation 34 auto-visseuse.

S'il s'avérait que pour certaines applications une pince de fixation 20 du type des figures 8 à 13, ne permettant pas l'utilisation de vis de fixation telles que les vis 34, ne conduisait pas à une résistance à l'arrachement suffisante, celle-ci peut être augmentée sans nécessiter de vis de fixation.

Selon la variante des figures 15 et 16, une telle pince de fixation 20 présente, de part et d'autre de l'âme 21, deux bras élastiques 41, 42 obtenus par découpe partielle de l'âme 21 en 45,46 et s'étendant le long de l'âme 21 et perpendiculairement à celle-ci ; l'extrémité libre de chacun des bras 41, 42 est conformée en crochet, respectivement 43, 44, constituant ensemble une sorte de V à l'intérieur duquel vient se clipser le profilé primaire 13 ; lorsque celui-ci est en place, figure 16, les bras 41, 42 reviennent élastiquement le long de l'âme 21 et les crochets 43, 44 viennent par leur extrémité au contact du dos du profilé primaire 13, le verrouillant en position.

Selon la variante de la figure 17, les fentes telles que les fentes 36 décrites précédemment sont remplacées par des rainures 39 obtenues par pliage de prolongements latéraux de l'aile supérieure 23 ; plus précisément, sur chacun de ses côtés latéraux, l'aile supérieure 23 est prolongée par un bord tombé 47 dirigé vers l'aile inférieure 22 et lui-même prolongé d'un retour 48 s'étendant parallèlement à lui et dirigé vers l'aile supérieure 23 ; avantageusement, des griffes 49 s'étendent dans les rainures 39, ici issues des retours 48. Suivant cette variante, l'aile inférieure 22, le retour inférieur 24 et leur raccordement sont munis de nervures de renforcement 59 s'étendant longitudinalement sur une partie de la longueur de l'aile 22 et du retour 24 inférieurs.

Selon une variante, non représentée, de la figure 17, les retours 48 ont leur extrémité libre conformée en crochet, à la manière des crochets 43, 44 des bras élastiques 41, 42 de la figure 15, pour montage par clipsage du profilé primaire 13.

Comme on l'aura compris, et comme cela est visible sur les figures, les pinces de fixation 20 qui viennent d'être décrites sont d'une seule pièce, en particulier l'âme 21, l'aile inférieure 22 et le retour inférieur 24, l'âme 21 étant placée, par rapport à l'aile inférieure 22, à l'extrémité opposée à celle par laquelle cette aile inférieure 22 se raccorde au retour inférieur 24.

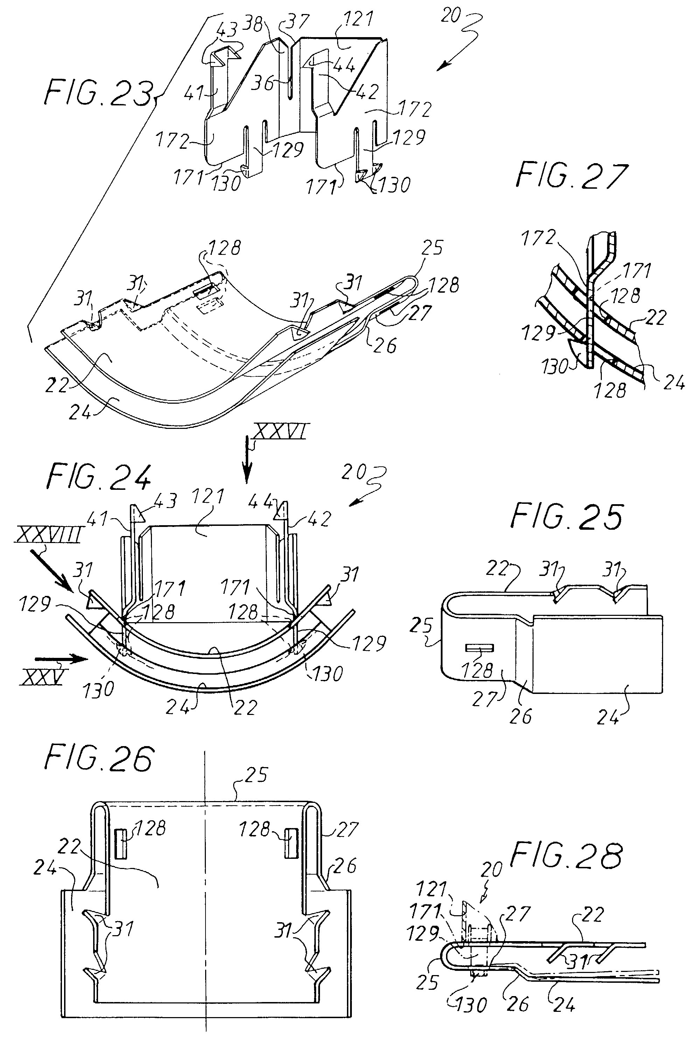

Pour certaines applications, il est souhaitable que l'âme 21 soit disposée au droit du raccordement de l'aile inférieure 22 en retour inférieur 24 ; en effet, dans les variantes décrites ci-dessus, un effort de soulèvement important appliqué à l'âme 21 par les profilés primaires 13 a tendance, malgré l'organe limiteur d'écartement ou de serrage 29-30, à écarter l'aile inférieure 22 et le retour inférieur 24 compte tenu du bras de levier représenté par la longueur de l'aile inférieure 22, et donc à désolidariser la pince de fixation 20 du bord de l'élément sur lequel elle est montée. En référence aux figures 23 à 28, on voit une variante de pince de fixation 20 selon laquelle l'âme 121 est placée au droit du raccordement de l'aile inférieure 22 au retour inférieur 24 ; pour ce faire, ici la pince de fixation 20 est en deux pièces.

Pour faciliter la compréhension, sur ces figures les constituants de la pince de fixation identiques ou jouant le même rôle que ceux des variantes précédentes portent les mêmes références.

Plus précisément, la pince de fixation 20 est constituée de deux pièces, une première pièce comprenant l'aile inférieure 22 et le retour inférieur 24, et une seconde pièce comprenant essentiellement l'âme 121, ces deux pièces comportant des moyens d'assemblage complémentaires pour l'assemblage de l'une à l'autre.

Comme dans les variantes précédentes, le raccordement 25-26-27 de l'aile inférieure 22 au retour inférieur 24 est étagé.

Comme à la figure 13, les bords déformés 38 de l'âme 121 sont munis de fentes 36 ; ici, ces bords 38 sont chacun prolongé selon un retour latéral 172 s'étendant globalement perpendiculairement à l'âme 121 ; ici, les bras élastiques 41, 42 à extrémité conformée en crochet, respectivement 43, 44, décrits à propos de la variante de la figure 15, sont portés par ces retours latéraux 172.

A leur partie inférieure, par rapport aux figures, les retours latéraux 172 sont munis de pattes 129 à crochets 130, chaque patte 129 s'étendant vers le bas au delà du bord inférieur 171 du retour latéral 172 correspondant, en étant bordée latéralement par des fentes ménagées dans le retour latéral 172 lui conférant une certaine élasticité.

Ces pattes 129 sont destinées à traverser des trous 128 en regard ménagés dans la partie intermédiaire 27 du raccordement et l'aile inférieure 22.

Les trous 128 sont ici de forme générale rectangulaire ; leur longueur correspond à la largeur des pattes 129 en sorte que celles-ci sont positionnées, ainsi que l'âme 121, parfaitement dans le sens longitudinal. La largeur du trou 128 ménagé dans l'aile inférieure 22 peut être telle que la patte 129 et ses crochets 130, ici prévus vers l'extérieur par rapport au retour latéral 172, le traversent sans qu'il soit nécessaire de faire appel à l'élasticité de la patte 129 ; le trou 128 ménagé dans la partie intermédiaire 27 du raccordement a une largeur correspondant à celle des crochets 130 et est positionné en sorte que ceux-ci le traversent grâce à la possibilité qu'a la patte 129 de se déformer élastiquement transversalement ; cette déformation élastique est facilitée en donnant une forme arrondie au bord d'attaque des crochets 130, comme le montrent les dessins.

Lorsque les pattes 129 sont en place, le bord inférieur 171 des retours latéraux 172 coopère avec la face supérieure de l'aile inférieure 22 tandis que les crochets 130 coopèrent avec la face inférieure de la partie intermédiaire 27 du raccordement au droit du bord externe de son trou 128.

Ainsi, les pattes 129 à crochets 130 constituent les moyens de liaison reliant l'âme 121 à l'ensemble aile inférieure 22 - retour inférieur 24, cette liaison étant du type clipsage.

Cette liaison est facilitée par l'élasticité de l'ensemble aile inférieure 22 - retour inférieur 24 : il suffit en effet, avant d'introduire les pattes 129 dans les trous 128, de rapprocher manuellement l'aile inférieure 22 du retour inférieur 24, comme montré en traits mixtes sur la figure 28 ; après mise en place des pattes 129, en lâchant l'aile inférieure 22 et le retour 24 ceux-ci retrouvent leur position dans laquelle ils sont parallèles, ou, mieux, reviennent dans une position dans laquelle ils sont légèrement rapprochés l'un de l'autre.

Les pattes 129 à crochets 130 constituent non seulement des moyens de liaison mais également un organe limiteur d'écartement limitant l'écartement entre l'aile inférieure 22 et le retour inférieur 24 ; c'est par réaction au droit de cet organe limiteur que, après insertion à force du bord d'un élément tel qu'une plaque de toiture entre ceux-ci 22, 24, ledit bord est pincé et la pince de fixation 20 fixée sur ledit bord.

Bien entendu, cette disposition en deux pièces de la pince qui vient d'être décrite est applicable à toutes les variantes décrites à propos des figures 7 à 17.

Les profilés primaires 13 fixés sur la toiture par les pinces de fixation 20 s'étendent longitudinalement par rapport à la toiture et constituent une ossature primaire destinée à recevoir une ossature secondaire constituée par des profilés secondaires 14 qui eux s'étendent transversalement.

Chaque profilé secondaire 14 est réalisé par pliage en sorte d'avoir globalement une section en forme de T. Ainsi, le pied 55 du T, figure 2, est prolongé, par un pliage à 90 degrés, d'un retour 56 lui-même prolongé, par un pliage à 180 degrés, d'une partie 57 constituant le dos du profilé secondaire 14 et dont l'extrémité 58 est repliée à 180° et s'étend, en direction du pied 55, dans le plan du retour 56.

La fixation du profilé secondaire 14 au profilé primaire 13, par rapport auquel il s'étend transversalement, peut être réalisée, comme cela est visible sur la figure 2, par une équerre 50 droite en forme de L dont une aile 51 est fixée au pied 55 du profilé secondaire 14 par une vis 52 et dont l'autre aile 53 est fixée au dos du profilé primaire 13 par une vis 54.

Il est possible également de fixer le profilé secondaire 14 au profilé primaire 13 sans faire appel à des vis de fixation. En se reportant aux figures 18 à 20, un étrier 60 comprend une base 61 rectangulaire munie de deux jambages 62, 63 globalement parallèles dont l'extrémité libre 64, 65 est recourbée vers l'intérieur, les deux extrémités 64, 65 se faisant face et définissant deux rainures parallèles adaptées à recevoir les bords libres des ailes du profilé primaire 13 en forme de U ; la base 61 et les jambages 62, 63 de l'étrier 60 réalisent une forme semblable à celle du U du profilé primaire 13, les jambages 62, 63 étant légèrement plus hauts que les ailes dudit profilé primaire 13 ; la base 61 est munie d'un trou taraudé 66 avec lequel coopère une vis 67 dite de blocage ; ainsi, après que l'étrier 60 a été présenté en chevauchement par rapport au profilé primaire 13 et descendu sur celui-ci, les extrémités recourbées 64, 65 s'étant élastiquement écartées pour franchir les ailes du profilé primaire 13 puis étant venues le long desdites ailes dont le bord libre est au droit des rainures des extrémités 64, 65, le vissage de la vis de blocage 67 fait remonter, par appui sur le dos du profilé primaire 13, l'étrier 60 par rapport audit profilé et l'étrier 60, comme le montre la figure 19, est fixé sur le profilé primaire 13.

Sur l'un des bords de la base 61 de l'étrier 60 qui ne porte pas de jambage 62 ou 63, la base 61 porte une tête 68 plane s'étendant perpendiculairement à la base 61 dans la direction opposée à celle des jambages 62, 63 ; le bord libre de la tête 68 est plié à angle droit pour constituer une sorte de visière 69 qui s'étend donc parallèlement à la base 61 en étant placée au dessus d'elle ; la visière 69 est munie d'une échancrure 70 pour passage d'un outil permettant le serrage de la vis 67.

La longueur de la visière 69 est légèrement inférieure à la moitié de la largeur du dos 57 du profilé secondaire 14. Ainsi, grâce à l'élasticité de l'extrémité 58 du profilé secondaire 14 et au jeu qui existe entre le bord de ladite extrémité 58 et le pied 55 du profilé secondaire 14, la visière 69 de l'étrier 60 peut être introduite dans l'espace existant entre le retour 56 et le dos 57 du profilé secondaire 14 ; on remarquera que lorsque la visière 69 y est en place, le bord de l'extrémité 58 adapté à coopérer avec la tête 68 de l'étrier 60 verrouille l'assemblage du profilé secondaire 14 et de l'étrier 60.

Compte tenu des longueurs des bâtiments à rénover pouvant être rencontrées et des longueurs standards des profilés secondaires 14, il peut être nécessaire d'avoir à assembler en longueur, bout à bout, des profilés secondaires 14 ; pour ce faire, on peut, comme le montre la figure 21, utiliser un prolongateur 73 pouvant être introduit dans les extrémités en regard de deux profilés secondaires 14 contigus, plus précisément dans l'espace défini par le retour 56, le dos 57 et l'extrémité 58 desdits profilés ; le prolongement 73 présente latéralement à mi-longueur des tétons de positionnement 74 pour le positionnement relatif du prolongateur 73 par rapport auxdits profilés.

La figure 22 montre une autre utilisation possible de la pince de fixation 20 décrite ci-dessus à propos de la figure 7 ; ici, la pince de fixation 20 est montée en bout d'une plaque de toiture 10 de la même manière que précédemment mais côté intérieur du bâtiment, sur une ondulation supérieure 11 compte tenu de la courbure de son aile inférieure 22 et de son retour inférieur 24 ; l'aile supérieure 23 et le retour supérieur 32 sont mis à profit pour y fixer, à l'aide d'une vis 94, le support 91 d'une suspente à pivot 90 ; le support 91 présente deux ailes présentant des ouvertures 95 circulaires en regard dans lesquelles prennent place, à pivotement, les extrémités cylindriques d'une traverse 92 reliée en son milieu par une tige filetée 93 s'étendant entre les ailes du support 91 ; ainsi, quelle que soit la pente de la toiture, il est possible de disposer la tige filetée 93 verticalement et d'y fixer tout accessoire désiré, tel que par exemple un moyen d'éclairage, un faux plafond ou autre.

Pour rénover, selon l'invention, la toiture constituée ici de plaques de toiture ondulées 10, on s'y prend comme suit.

On aligne, au droit des ondulations inférieures 12 des plaques de toiture 10, des pinces de fixation 20 qu'on fixe, comme décrit ci-dessus, sur le bord desdites plaques de toiture 10 ; le nombre de rangées est fonction des efforts d'arrachement locaux dus au vent par exemple ; sur la figure 1, il y a une rangée toutes les trois ondulations inférieures 12.

On fixe ensuite les profilés primaires 13 sur les pinces de fixation 20.

Pour obtenir un bon alignement des profilés primaires 13 par rapport à la ligne de plus grande pente de la toiture, on peut utiliser un gabarit, tel que le gabarit 80 montré sur la figure 5 dont le profil correspond à la section des plaques de toiture 10, ici ondulées, et est muni d'une échancrure 81 pour le passage de la pince de fixation 20.

On fixe ensuite, figure 2, une première ligne transversale de profilés secondaires 14 que l'on dispose transversalement par rapport aux profilés primaires 13, à l'aide d'équerres 50 ou d'étriers 60.

On place un panneau 15 de polystyrène expansé du côté de la pente montante de la toiture par rapport au profilé secondaire 14 ; le panneau 15 présente une face plane et, à l'opposé de cette face plane, une face épousant la forme des plaques de toiture 10 et donc ici de forme ondulée ; au droit de chaque sommet de ses ondulations, le panneau 15 présente une prédécoupe 17, figure 3, définissant une bande longitudinale retenue par une racine 19 ; lors de la mise en place du panneau, on arrache ladite bande du sommet placé au droit d'un profilé primaire 13 pour définir un canal 18 pour logement de celui-ci ; la hauteur des éléments de fixation des profilés et l'épaisseur des panneaux 15 sont telles que, lorsqu'un panneau 15 est en place sur les plaques de toiture 10, sa face supérieure plane affleure la face inférieure des extrémités 58 des profilés secondaires 14 sous laquelle il peut être glissé jusqu'à buter contre les pieds 55 desdits profilés secondaires 14.

Une deuxième rangée de profilés secondaires 14, figure 3, est ensuite placée le long des bords supérieurs des panneaux 15, profilés secondaires 14 dont les retours 56 viennent s'appliquer sur la face supérieure des panneaux 15 et qui sont alors fixés aux profilés primaires 13 à l'aide d'équerres 50 ou d'étriers 60 ; à partir de cette deuxième rangée de profilés secondaires 14 on procède de la même façon qu'à partir de la première rangée, et ainsi de suite.

Comme on le voit, il est aisé, grâce à l'invention, de rénover une toiture en améliorant son isolation thermique. Pour améliorer celle-ci à la jonction latérale, perpendiculairement aux profilés secondaires 14, de deux panneaux 15 contigus, ceux-ci ont latéralement d'un côté une section en escalier 16, figure 3, et de l'autre côté une section complémentaire à la précédente ; ainsi, figure 4, deux panneaux 15 voisins s'emboîtent l'un dans l'autre au droit de leur jonction.

A partir de la surface plane continue constituée par les faces supérieures planes de tous les panneaux 15 contigus, il est facile de compléter la rénovation en disposant par dessus, comme connu, un revêtement d'étanchéité ; on peut, par exemple, y dérouler des membranes d'étanchéité, après avoir interposé, ou non, un écran d'indépendance pour disposer d'une séparation chimique en fonction de la nature des isolants thermiques et d'étanchéité ; la fixation des membranes est réalisée par collage et/ou soudage thermique.

## Revendications

1. Dispositif de fixation, caractérisé par le fait qu'il comprend, d'une part, une pince de fixation (20) élastique comportant une âme (21,121) et une aile (22) dite inférieure prolongée selon un retour (24) dit inférieur s'étendant parallèlement à l'aile inférieure (22), l'espacement entre l'aile inférieure (22) et le retour inférieur (24) étant prévu pour recevoir le bord d'éléments tels que des plaques de toiture (10), et, d'autre part, un organe limiteur d'écartement (29-30, 129-130) destiné à limiter l'écartement entre l'aile inférieure (22) et le retour inférieur (24) lesquels sont destinés à pincer ledit bord en vue de fixer la pince de fixation (20) sur ledit bord.

2. Dispositif de fixation selon la revendication 1, caractérisé par le fait que le raccordement du retour inférieur (24) à l'aile inférieure (22) est étagé et est constitué de deux parties, l'une (25) dite extérieure et l'autre (26) dite intérieure, décalées parallèlement à l'aile inférieure (22) et au retour inférieur (24) et reliées par une partie intermédiaire (27) s'étendant globalement parallèlement à l'aile inférieure (22) et au retour inférieur (24).

3. Dispositif de fixation selon l'une des revendications 1 ou 2, caractérisé par le fait que l'aile inférieure (22) et le retour inférieur (24) ont une forme adaptée à celle des éléments (10) sur lesquelles elles sont destinées à être montées.

4. Dispositif de fixation selon la revendication 3, caractérisé par le fait que la forme de l'aile inférieure (22) et du retour inférieur (24) est cylindrique et reproduit l'ondulation d'un élément tel qu'une plaque de toiture (10) ondulée, leur concavité étant dirigée du côté où se situe l'âme (21,121) de la pince de fixation (20).

5. Dispositif de fixation selon l'une des revendications 2 à 4, caractérisé par le fait que la partie intermédiaire (27) du raccordement et l'aile inférieure (22) présentent chacune au moins un trou (28,128) en regard l'un de l'autre permettant le passage de l'organe limiteur d'écartement (29,129-130).

6. Dispositif de fixation selon l'une des revendications 1 à 5, caractérisé par le fait que l'aile inférieure (22) est munie sur ses bords latéraux longitudinaux de griffes (31) dont les pointes d'extrémité sont dirigées vers le retour inférieur (24) et le raccordement (25-26).

7. Dispositif de fixation selon l'une des revendications 1 à 6, caractérisé par le fait que l'âme (21,121) porte également une aile (23) dite supérieure s'étendant parallèlement à l'aile inférieure (22) et du même côté que celle-ci par rapport à l'âme (21,121), l'aile supérieure (23) étant prolongée par un retour (32) dit supérieur s'étendant entre les ailes inférieure (22) et supérieure (23) parallèlement à celles-ci et en direction de l'âme (21,121).

8. Dispositif de fixation selon la revendication 7, caractérisé par le fait qu'il comprend en outre une platine (33) de forme générale rectangulaire destinée à être reçue dans l'espacement existant entre l'aile supérieure (23) et le retour supérieur (32) munis tous deux de trous (35) disposés en regard l'un de l'autre.

9. Dispositif de fixation selon l'une des revendications 1 à 8, caractérisé par le fait que l'âme (21,121) comporte latéralement deux fentes (36).

10. Dispositif de fixation selon la revendication 9, caractérisé par le fait que les fentes (36) sont inclinées par rapport à l'axe longitudinal de l'âme (21,121).

11. Dispositif de fixation selon la revendication 10, caractérisé par le fait que les deux fentes (36) se rapprochent l'une de l'autre en se rapprochant de l'aile inférieure (22).

12. Dispositif de fixation selon la revendication 9, caractérisé par le fait que les fentes (36) sont parallèles à l'axe longitudinal de l'âme (21,121).

13. Dispositif de fixation selon l'une des revendications 9 à 12, caractérisé par le fait que l'un au moins des bords de chaque fente (36) est un bord à dents.

14. Dispositif de fixation selon l'une des revendications 9 à 13, caractérisé par le fait que, du côté intérieur, un bord coupé (37) dans l'âme (21,121) définit une entrée pour les fentes (36).

15. Dispositif de fixation selon l'une des revendications 9 à 14, caractérisé par le fait que le profil en coupe des fentes (36) est incliné par rapport au plan de symétrie longitudinal (S) de l'âme (21,121).

16. Dispositif de fixation selon la revendication 15, caractérisé par le fait que le profil en coupe incliné des fentes (36) est obtenu par une découpe inclinée des fentes (36) par rapport au plan de l'âme (21,121).

17. Dispositif de fixation selon la revendication 15, caractérisé par le fait que le profil en coupe incliné des fentes (36) est obtenu par une découpe réalisée perpendiculairement à l'âme (21,121), les bords de l'âme (21,121) où sont réalisées ces découpes étant ensuite légèrement pliés pour s'étendre avec un certain angle par rapport à l'âme (21,121).

18. Dispositif de fixation selon l'une des revendications 9 à 17, caractérisé par le fait que la pince de fixation (20) présente, de part et d'autre de l'âme (21,121), deux bras élastiques (41, 42) s'étendant le long de l'âme (21,121) perpendiculairement à celle-ci et dont l'extrémité libre est conformée en crochet (43, 44).

19. Dispositif de fixation selon l'une des revendications 1 à 6, caractérisé par le fait que l'âme (21,121) porte également une aile (23) dite supérieure s'étendant parallèlement à l'aile inférieure (22) et du même côté que celle-ci par rapport à l'âme (21,121), l'aile supérieure (23) étant prolongée, sur chacun de ses côtés latéraux, d'un bord tombé (47) dirigé vers l'aile inférieure (22) et lui-même prolongé d'un retour (48) s'étendant parallèlement à lui et dirigé vers l'aile supérieure (23).

20. Dispositif de fixation selon la revendication 19, caractérisé par le fait que des griffes (49), issues des retours (48), s'étendent dans les rainures (39) définies par les bords tombés (47) et les retours (48).

21. Dispositif de fixation selon la revendication 19, caractérisé par le fait que les retours (48) ont leur extrémité conformée en crochet.

22. Dispositif de fixation selon l'une des revendications 1 à 21, caractérisé par le fait que l'âme (21), l'aile inférieure (22) et le retour inférieur (24) sont d'une seule pièce.

23. Dispositif de fixation selon la revendication 22, caractérisé par le fait que le retour inférieur (24) s'étend parallèlement à l'aile inférieure (22) en direction de l'âme (21).

24. Dispositif de fixation selon l'une des revendications 22 ou 23, caractérisé par le fait que l'organe limiteur d'écartement de serrage est un boulon de serrage constitué d'une vis (29) et d'un écrou borgne (30).

25. Dispositif de fixation selon l'une des revendications 1 à 21, caractérisé par le fait que l'aile inférieure (22) et le retour inférieur (24) sont d'une seule pièce sur laquelle l'âme (121) est rapportée.

26. Dispositif de fixation selon les revendications 5 et 25 prises conjointement, caractérisé par le fait que l'âme (121) porte au moins une patte (129) à crochets (130) traversant les trous (128) en regard ménagés dans la partie intermédiaire (27) du raccordement et l'aile inférieure (22), en constituant l'organe limiteur d'écartement (129-130).

27. Ossature destinée à fixer sur une toiture des moyens d'isolation en vue de sa rénovation, comportant des profilés (13) dits primaires, s'étendant selon la ligne de plus grande pente de ladite toiture, et des profilés (14) dits secondaires s'étendant selon une ligne perpendiculaire à la ligne de plus grande pente et portés par les profilés primaires (13), caractérisé par le fait que les profilés primaires (13) sont fixés à la toiture par l'intermédiaire de dispositifs de fixation selon l'une quelconque des revendications 1 à 26.

28. Ossature selon la revendication 27, caractérisée par le fait que les profilés secondaires (14) ont globalement une forme de T ayant un pied (55) prolongé, par un pliage à 90 degrés, d'un retour (56) lui-même prolongé, par un pliage à 180 degrés, d'une partie (57) constituant le dos du profilé secondaire (14) dont l'extrémité (58) est repliée à 180 degrés et s'étend, en direction du pied (55) dans le plan du retour (56).

29. Ossature selon la revendication 28, caractérisée par le fait que le profilé secondaire (14) est fixé au profilé primaire (13) par une équerre (50) droite en forme de L dont une aile (51) est fixée au pied (55) du profilé secondaire (14) par une vis (52) et dont l'autre aile (53) est fixée au dos du profilé primaire (13) également par une vis (54).

30. Ossature selon la revendication 28, caractérisée par le fait que le profilé secondaire (14) est fixé au profilé primaire (13) par un étrier (60) qui comprend une base (61) munie de deux jambages (62, 63) globalement parallèles dont l'extrémité libre (64,65) est recourbée vers l'intérieur, les deux extrémités (64,65) se faisant face et définissant deux rainures parallèles adaptées à recevoir les bords libres des ailes du profilé primaire (13) en forme de U, les jambages (62,63) étant légèrement plus hauts que les ailes du profilé primaire (13) et la base (61) de l'étrier (60) étant munie d'un trou taraudé (66) avec lequel coopère une vis (67) de blocage.

31. Ossature selon la revendication 30, caractérisée par le fait que, sur l'un des bords de la base (61) de l'étrier (60) qui ne porte pas de jambage (62,63), la base (61)porte une tête (68) plane s'étendant perpendiculairement à la base (61) dans la direction opposée à celle des jambages (62,63), le bord libre de la tête (68) étant plié à angle droit pour constituer une visière (69) qui s'étend parallèlement à la base (61) en étant placée au dessus d'elle, et la longueur de la visière (69) étant légèrement inférieure à la moitié de la largeur du dos (57) du profilé secondaire (14).
